# EUROPEAN PATENT SPECIFICATION

(11) **EP 4 407 199 B1**
(45) Date of publication and mention of the grant of the patent: **11.11.2026**
(21) Application number: 23160354.9
(22) Date of filing: 07.03.2023
(51) Int. Cl.: F16B 43/00, F16B 13/14, E04B 1/38, E21D 20/02

(54) **INJECTION WASHER FOR AN ANCHOR SYSTEM**
INJEKTIONSSCHEIBE FÜR EIN ANKERSYSTEM
RONDELLE D'INJECTION POUR SYSTÈME D'ANCRAGE

(30) Priority: 24.01.2023 US 202318159034
(43) Date of publication of application: 31.07.2024
(73) Proprietor: Black & Decker, Inc., New Britain, CT 06053 (US)
(72) Inventor: MAHRENHOLTZ, Philipp, 60965 Frankfurt (DE); CHAMBERLAIN, Matthew, Bethel, 06801 (US)
(74) Representative: Slingsby Partners LLP

(56) References cited:
- EP-A1- 0 774 587
- CN-A- 110 753 798
- GB-A- 621 656
- US-B2- 10 434 974

## Description

### Field

This specification concerns injection washers for anchor systems which secure objects to surfaces e.g. concrete.

### Background

To fix an object to concrete it is known to use a mechanical anchor such as an expansion anchor which is basically a threaded rod with an expansion portion. The expansion portion is wedged in a hole drilled in a concrete surface leaving the threaded rod protruding out of the hole. An object is secured in place by causing the threaded rod to extend through a hole in the object to be secured. A washer is then provided around the threaded rod. Finally a nut is wound onto the threaded rod for clamping the object between the washer and the concrete surface.

An alternative way of fixing an object to concrete is to use a chemical anchor which is basically industrial adhesive. Chemical anchor product is injected into a hole drilled in concrete. Next a threaded rod is inserted into the hole leaving part of the threaded rod protruding out of the hole. When the chemical anchor hardens the threaded rod is held securely. An object is secured in place by causing the threaded rod to extend through a hole in the object to be secured. A washer is then provided around the threaded rod. Finally a nut is wound onto the threaded rod for clamping the object between the washer and the concrete surface.

An issue with the above mentioned techniques of securing objects to concrete is that the existence of a gap between the threaded rod and the object being secured is disadvantageous. This is because such a gap results in a degree of play in the anchor system which overtime can cause fatigue of the anchor system especially in regions prone to earthquakes. To remove the existence of such gaps, and thereby improve stability and longevity of anchor systems, an injection washer can be used. An injection washer is basically a washer having an injection channel through which adhesive, namely chemical anchor product, can be injected to fill the gap between a threaded rod and the inner surface of an object being secured.

Injection washers are known and are discussed for example in EP3365565B1.

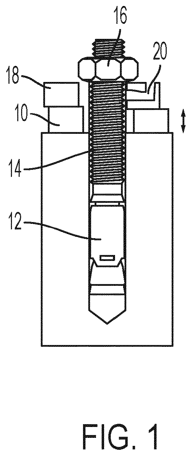

A problem with injection washers is a user falsely believing that a gap has been filled. Fig. 1 shows an object 10 secured to a concrete surface via an anchor system. The anchor system has an expansion element 12 wedged in a hole of the concrete and a threaded rod 14 extending therefrom. A nut 16 wound onto the threaded rod 14 clamps the object 10 between the concrete surface and an injection washer 18. The injection washer has a channel 20 through which chemical anchor product, hereafter referred to as adhesive, can be injected for filling the gap between the threaded rod 14 and the internal surface of the object being secured 10. However if the injection washer 18 is positioned in use such that the channel 20 abuts against the threaded rod 14, as illustrated in Fig. 1, then this will restrict the flow of adhesive from the channel 20. In practice, upon the flow of adhesive from the channel 20 becoming blocked, a user who is intending to fill with adhesive the gap between the threaded rod 14 and the object 10 will notice that no more adhesive can be injected into the channel 20 and will stop injecting adhesive. They will believe that they have achieved their intention of filling the gap between the threaded rod 14 and the object 10 being secured, however, they will have merely filled the channel 20 with adhesive whereby a gap still exists between the threaded rod 14 and the object 10 being secured. Accordingly they will not have improved the stability of their anchor system, whereby the mistaken belief that they have indeed improved the stability of their anchor system can have dangerous consequences.

The present invention addresses the above mentioned problem associated with injection washers, namely that of users having the false impression that they have filled with adhesive the gap between an object being secured and a threaded rod.

CN 110753798A relates to a filling system for filling a slot-like recess with a flowable, curable compound. The filling system has a filling aid and a filling element, in particular a filling disk. The filling aid is mounted for rotation on the filling element to ensure optimal positioning of the filling aid with respect to the slot-like recess.

Furthermore, the filling process of the slot-like recess can be observed and checked at any time because of the transparent design of the filling aid.

EP 0774587 describes a connection for connecting elements comprising a first said element, at least a second said element for connection to the first element and a fixing means extending from one said element through at least an aperture in the other said element. The fixing means has a smaller cross section than that of the aperture where it passes through the aperture, so as to leave a gap in the aperture. A gap filling material is used to fill in the gap. The fixing means may be, for example, a stud fixed to one element with an associated nut or a bolt extending through both elements. The gap filling material may be any setting fluid such as a settable resin or material with a low melting point such as will flow into the gap and set therein such as to resist any precalculated lateral displacement forces between the elements. A closure member is provided having a first hole to receive the fixing means and a second hole for injecting the gap filling material into the gap, the closure member being such as to cover at least a part of the gap.

GB 621656 describes a system in which a bolt is attached to the surface of a panel or like part that may not be completely perforated by a split ring sunk into a recess in the panel and having a taper bore for expansion by the conical head of a bolt. The ring is held in place, during fixing, by pressure from a washer having a clearance hole for the bolt and serving as abutment for a nut. The nut may be secured to a table leg which may thus be secured to the top.

US 10434974 describes a hood lifting assembly according to various implementations which includes a re-latching feature that allows two slidably coupled plates to be reset, or locked, relative to each other by moving a head of a pin into a keyhole opening of a keyhole slot defined in one of the plates. In an initial position, the head of the pin is spaced apart from the keyhole opening, allowing the pin to move along the keyhole slot from the initial position to a deployed position and then to a reset position. In other implementations, a hood lifting assembly includes an energy absorbing feature. One exemplary energy absorbing feature includes a plate defining an elongated slot that has a narrowed width portion through which a pin travels during movement from the initial position to the deployed position.

### Summary

According to the invention there is provided the injection washer of claim 1. Optional features thereof are defined in the dependent claims 2 to 10. Further according to the invention there is provided the anchor system of claim 11.

### Brief Description of the Drawings

Various embodiments of the invention will now be described by way of non-limiting example with reference to the accompanying drawings, in which:
Figs. 1 illustrates an anchor system which includes an injection washer;
Fig. 2 illustrates first and second body portions of an injection washer according to a first embodiment of the present invention;
Fig. 3 illustrates an injection washer according to a first embodiment of the present invention;
Fig. 4 illustrates the injection washer of Fig. 3 in use;
Fig. 5 illustrates an injection washer according to a second embodiment of the present invention; and
Fig. 6 illustrates the injection washer of Fig. 5 in use.

### Detailed Description

Embodiments of an injection washer according to the present invention will now be described, which in use can replace the injection washer 18 of the anchor system described in connection with Fig. 1.

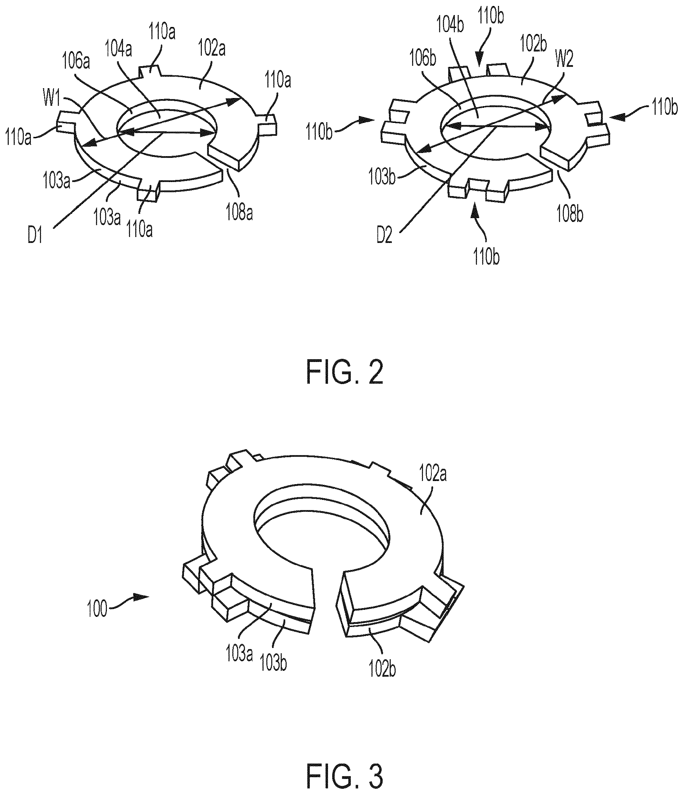

Fig. 2 shows first and second body portions 102a, 102b of an injection washer 100.

Both the first and second body portions 102a, 102b have an outwardly facing annularly extending surface. More specifically the first body portion 102a has a first annularly extending outer surface 103a, whereas the second body portion 102b has a second annularly extending outer surface 103b. The diameter W1 of the first annularly extending outer surface 103a is the same as the diameter W2 of the second annularly extending outer surface 103b, whereby the first and second body portions 102a, 102b have substantially similar outer profiles save for the alignment features 110a and 110b which are described below.

The first body portion 102a defines a first opening portion 104a. The second body portion 102b defines a second opening portion 104b. More specifically a first inwardly facing annularly extending surface 106a of the first body portion 102a defines the first opening portion 104a, whereas a second inwardly facing annularly extending surface 106b of the second body portion 102b defines the second opening portion 104b. The diameter D1 of the first opening portion 104a is smaller than the diameter D2 of the second opening portion 104b.

A gap 108a extends through the side of the first body portion 102a into the first opening portion 104a, whereby the first body portion 102a is substantially C-shaped. A gap 108b also extends through the side of the second body portion 102b into the second opening portion 104b, whereby the second body portion 102b is substantially C-shaped.

The first body portion 102a has a plurality of circumferentially distributed outwardly extending fingers 110a. The second body portion 102b has a plurality of circumferentially distributed outwardly extending finger pairs 110b. In use the first and second body portions 102a, 102b are stacked. Due to the similarity between the first and second diameters W1, W2 of the first and second annularly extending outer surfaces 103a, 103b proper axial alignment is achieved when the first and second annularly extending outer surfaces 103a, 103b align with each other as in Fig. 3. In order to achieve proper rotational alignment of the stacked body portions 102a, 102b this is facilitated by the fingers 110a and the finger pairs 110b. Proper rotational alignment is achieved when each of the fingers 110a aligns with a gap defined by the finger pairs 110b, whereby the gap 108a of the first body portion 102a will be aligned with the gap 108b of the second body portion 102b like in Fig. 3.

Such an injection washer 100 as illustrated in Fig. 3, defined by stacked first and second body portions 102a, 102b which have been properly aligned as described above, can be used in an anchor system of the kind described in connection with Fig. 1 instead of the injection washer 18.

To fix an object to concrete an expansion portion is wedged in a hole drilled in a concrete surface leaving a threaded rod, which is connected to the expansion portion, protruding out of the hole. An object is secured in place by causing the threaded rod to extend through a hole in the object to be secured. The injection washer 100 as illustrated in Fig. 3 is then arranged around the threaded rod. In other words the injection washer 100 is arranged on top of the object to be secured with the threaded rod extending through the opening defined by the aligned first and second opening portions 104a, 104b. A nut is then wound onto the threaded rod for clamping the object between the injection washer 100 and the concrete surface. Adhesive is then injected through the aligned gaps 108a, 108b in order to fill the gap between the threaded rod and the inner surface of the object being secured.

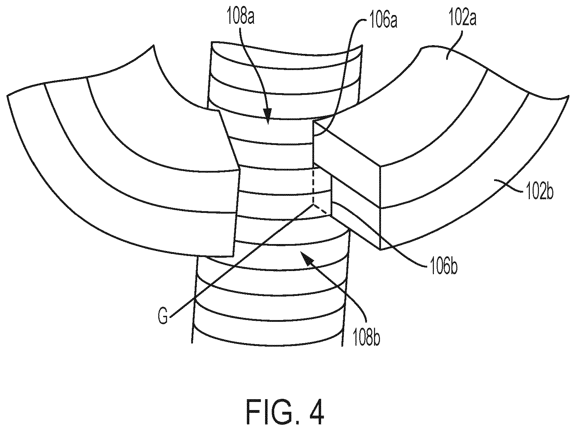

Referring to Fig. 4, advantageously even if the injection washer 100 is positioned in use such that the threaded rod abuts against the first inwardly facing annularly extending surface 106a of the first body portion 102a there will always be a gap between the threaded rod and the second inwardly facing annularly extending surface 106b of the second body portion 102b; wherein such a gap G is illustrated by the dotted lines in Fig. 4. In other words even if the gap 108a of the first body portion 102a is blocked by the threaded rod a user will always be able to inject adhesive through the gap 108b of the second body portion 102b in use in order to fill the gap between the threaded rod and the inner surface of the object being secured. When the volume being filled cannot accommodate any more adhesive the user will be more assured that the gap between the threaded rod and the inner surface of the object being secured has indeed been filled with adhesive compared to when using the anchor system described in the background section.

The injection washer 100 can be made of metal such as steel. In some embodiments the injection washer 100 is carbon steel or stainless steel. In some embodiments the injection washer 100 is zinc plated.

In another embodiment instead of the injection washer being formed of separate body portions the injection washer is instead formed as a single piece.

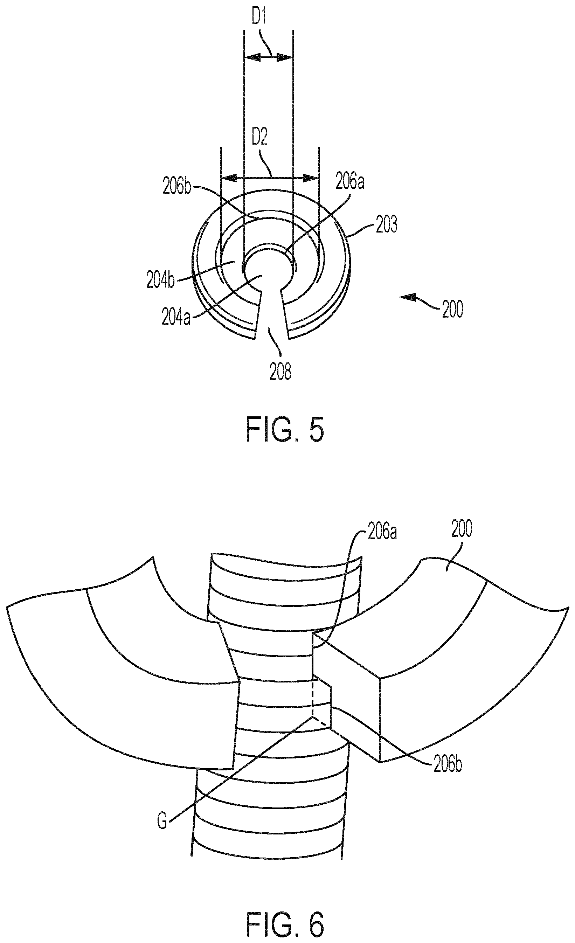

Fig. 5 shows an injection washer 200 formed as a single piece.

The injection washer 200 has an annularly extending outer surface 203.

The injection washer 200 defines a first opening portion 204a and a second opening portion 204b. More specifically a first inwardly facing annularly extending surface 206a of the injection washer 200 defines the first opening portion 204a, whereas a second inwardly facing annularly extending surface 206b of the injection washer 200 defines the second opening portion 204b. The diameter D1 of the first opening portion 204a is smaller than the diameter D2 of the second opening portion 204b.

A gap 208 extends through the side of the injection washer 200 into both the first and second opening portions 204a, 204b whereby the injection washer 200 is substantially C-shaped.

Such an injection washer 200 as illustrated in Fig. 5 can be used in an anchor system of the kind described in connection with Fig. 1 instead of the injection washer 20.

To fix an object to concrete an expansion portion is wedged in a hole drilled in a concrete surface leaving a threaded rod, which is connected to the expansion portion, protruding out of the hole. An object is secured in place by causing the threaded rod to extend through a hole in the object to be secured. The injection washer 200 as illustrated in Fig. 5 is then arranged around the threaded rod. In other words the injection washer 200 is arranged on top of the object to be secured with the threaded rod extending through the opening defined by the first and second opening portions 204a, 204b. A nut is then wound onto the threaded rod for clamping the object between the injection washer 200 and the concrete surface. Adhesive is then injected through the gap 208 in order to fill the gap between the threaded rod and the inner surface of the object being secured.

Referring to Fig. 6, advantageously even if the injection washer 200 is positioned in use such that the threaded rod abuts against the first inwardly facing annularly extending surface 206a of the injection washer 200 there will always be a gap between the threaded rod and the second inwardly facing annularly extending surface 206b of the injection washer 200; wherein such a gap G is illustrated by the dotted lines in Fig. 6. In other words since the diameter D1 of the first opening portion 204a is smaller than the diameter D2 of the second opening portion 204b even if the upper part of the gap 208 is blocked by the threaded rod a user will always be able to inject adhesive through the lower part of the gap 208 in use to fill the gap between the threaded rod and the inner surface of the object being secured. When the volume being filled cannot accommodate any more adhesive the user will be more assured that the gap between the threaded rod and the inner surface of the object being secured has indeed been filled with adhesive compared to when using the anchor system described in the background section.

The injection washer 200 can be made of metal such as steel. In some embodiments the injection washer 100 is carbon steel or stainless steel. In some embodiments the injection washer 100 is zinc plated.

It will be appreciated that whilst various aspects and embodiments have heretofore been described the scope of the present invention is not limited thereto and instead extends to encompass all arrangements, and modifications and alterations thereto, which fall within the scope of the appended claims.

Referring to Figs. 2 and 3 in some embodiments the injection washer 100 may have fewer or more alignment features. For example the first body portion may only have a single finger 110a and the second body portion 110b may only have a single finger pair 110b. In some embodiments the alignment features may be different. For example instead of the second body portion having finger pairs 110b it may instead just have fingers 110a located in substantially similar places around the second body portion 102b as those on the first body portion 102a, whereby to rotationally align the first and second body portions 102a, 102b the user needs to align the fingers 110a on the first body portion 102a with those on the second body portion 102b.

In some embodiments the injection washer 100 may omit alignment features and thus neither of the first and second body portions 102a, 102b have any fingers 110a or finger pairs 110b; naturally this places a greater burden on the user to properly align the first and second body portions 102a, 102b in use.

The injection washer 100, 200 heretofore described can be used in anchor systems which omit a nut for squeezing against the injection washer 100, 200 in order to secure an object between a surface and the injection washer 100, 200. For example in some concrete screw anchors a head section of the concrete screw anchor engages an object being secured to a surface in order to squeeze the object between the head section and the surface. More specifically in some concrete screw anchors a front part of the concrete screw anchor is configured to tap a thread into a bore drilled in a concrete surface whereas a rear end of the concrete screw anchor is provided with a head section; the concrete screw anchor being essentially rod-like between the front and rear ends. In order to secure an object to a concrete surface a hole is drilled in the concrete. A hole extending through the object to be secured is then aligned with the hole in the concrete. The front part of a concrete screw anchor is then caused to extend through such aligned holes, whereby the concrete screw anchor is subsequently turned in order to draw itself into threaded engagement with the hole drilled in the concrete. As the concrete screw anchor progressively draws itself into the hole in the concrete the head section provided at the rear end of the concrete screw anchor moves closer towards the object being secured, eventually touching it. Eventually the object being secured is squeezed by the head section against concrete surface for securing the object in place. An injection washer 100, 200 heretofore described can be used in such an anchor system between the object being secured and the head section. In particular by causing the concrete screw anchor to extend through the injection washer 100, 200, and for the head section of the concrete screw anchor to squeeze the object being secured against the concrete surface via the injection washer 100, 200, this will enable a user to fill the space between the object being secured and the rod-like part of the concrete screw anchor with adhesive to improve stability and longevity of the anchor system in use.

## Claims

1. An injection washer (100, 200) for an anchor system having a rod portion (14) fixed to a surface, the injection washer (100, 200) comprising first (104a, 204a) and second (104b, 204b) opening portions arranged relative to each other along an axis parallel with the rod portion (14) in use and which together define an opening through which the rod portion (14) extends in use, the first opening portion (104a, 204a) having a smaller width than the second opening portion (104b, 204b) in a direction perpendicular to the rod portion (14) in use and wherein a gap (108a, 108b, 208) extends through a side of the injection washer (100, 200) into each of the first (104a, 204a) and second (104b, 204b) opening portions, the gap (108a, 108b, 208) being formed through the whole axial thickness of the injection washer (100, 200).

2. The injection washer (200) of claim 1 which is formed as a single piece.

3. The injection washer (200) of claim 2 wherein the first opening portion (204a) is defined by a first inner surface portion (206a) of the injection washer (200) and the second opening portion (204b) is defined by a second inner surface portion (206b) of the injection washer (200).

4. The injection washer (200) of claim 3 wherein the first (204a) and second (204b) opening portions are substantially circular and the first opening portion (204a) has a smaller diameter than the second opening portion (204b).

5. The injection washer (200) of any of claims 2 to 4 wherein the injection washer (200) is substantially C-shaped.

6. The injection washer (100) of claim 1 which is not formed as a single piece wherein the first opening portion (104a) is defined by a first body portion (102a) and the second opening portion (104b) is defined by a separate second body portion (102b), the first (102a) and second (102b) body portions being stacked together in use and having substantially similar outer profiles around at least some of the external surfaces (103a, 103b) thereof.

7. The injection washer (100) of claim 6 wherein the first (104a) and second (104b) opening portions are substantially circular and the first opening portion (104a) has a smaller diameter than the second opening portion (104b).

8. The injection washer (100) of claim 7 wherein the first body portion (102a) and the second body portion (102b) are each substantially C-shaped.

9. The injection washer (100) of any of claims 6 to 8 wherein the first (102a) and second (102b) body portions each have externally arranged alignment features (110a, 110b) for enabling a user to determine if the first (102a) and second (102b) body portions have been rotationally aligned in use, whereby upon successful rotational alignment the gap (108a) extending through the side of the first body portion (102a) into the first opening portion (104a) aligns with the gap (108b) extending through the side of the second body portion (102b) into the second opening portion (104b).

10. The injection washer (100) of claim 9 wherein one of the first body portion (102a) and the second body portion (102b) has at least one externally extending first finger (110a) and the other thereof has at least two externally extending second fingers (110b), wherein the first finger (110a) aligns with a gap between the second fingers (110b) when the first (102a) and second (102b) body portions have been properly aligned in use.

11. An anchor system having a rod portion (14) fixed to a surface and an injection washer (100, 200) according to any preceding claim.

## Patentansprüche

1. Injektionsscheibe (100, 200) für ein Ankersystem mit einem Stangenabschnitt (14), der an einer Oberfläche befestigt ist, wobei die Injektionsscheibe (100, 200) einen ersten (104a, 204a) und einen zweiten (104b, 204b) Öffnungsabschnitt umfasst, die relativ zueinander entlang einer Achse parallel zu dem Stangenabschnitt (14) in Verwendung angeordnet sind und die zusammen eine Öffnung definieren, durch die sich der Stangenabschnitt (14) in Verwendung erstreckt, wobei der erste Öffnungsabschnitt (104a, 204a) eine kleinere Breite als der zweite Öffnungsabschnitt (104b, 204b) in einer Richtung senkrecht zu dem Stangenabschnitt (14) in Verwendung aufweist und wobei sich ein Spalt (108a, 108b, 208) durch eine Seite der Injektionsscheibe (100, 200) in jeden von dem ersten (104a, 204a) und dem zweiten (104b, 204b) Öffnungsabschnitt erstreckt, wobei der Spalt (108a, 108b, 208) durch die gesamte axiale Dicke der Injektionsscheibe (100, 200) gebildet ist.

2. Injektionsscheibe (200) nach Anspruch 1, die als ein Einzelstück gebildet ist.

3. Injektionsscheibe (200) nach Anspruch 2, wobei der erste Öffnungsabschnitt (204a) durch einen ersten Innenoberflächenabschnitt (206a) der Injektionsscheibe (200) definiert ist und der zweite Öffnungsabschnitt (204b) durch einen zweiten Innenoberflächenabschnitt (206b) der Injektionsscheibe (200) definiert ist.

4. Injektionsscheibe (200) nach Anspruch 3, wobei der erste (204a) und der zweite (204b) Öffnungsabschnitt im Wesentlichen kreisförmig sind und der erste Öffnungsabschnitt (204a) einen kleineren Durchmesser als der zweite Öffnungsabschnitt (204b) aufweist.

5. Injektionsscheibe (200) nach einem der Ansprüche 2 bis 4, wobei die Injektionsscheibe (200) im Wesentlichen C-förmig ist.

6. Injektionsscheibe (100) nach Anspruch 1, die nicht als ein Einzelstück gebildet ist, wobei der erste Öffnungsabschnitt (104a) durch einen ersten Körperabschnitt (102a) definiert ist und der zweite Öffnungsabschnitt (104b) durch einen separaten zweiten Körperabschnitt (102b) definiert ist, wobei der erste (102a) und der zweite (102b) Körperabschnitt in Verwendung zusammengestapelt sind und im Wesentlichen ähnliche Außenprofile um zumindest einige der externen Oberflächen (103a, 103b) davon aufweisen.

7. Injektionsscheibe (100) nach Anspruch 6, wobei der erste (104a) und der zweite (104b) Öffnungsabschnitt im Wesentlichen kreisförmig sind und der erste Öffnungsabschnitt (104a) einen kleineren Durchmesser als der zweite Öffnungsabschnitt (104b) aufweist.

8. Injektionsscheibe (100) nach Anspruch 7, wobei der erste Körperabschnitt (102a) und der zweite Körperabschnitt (102b) jeweils im Wesentlichen C-förmig sind.

9. Injektionsscheibe (100) nach einem der Ansprüche 6 bis 8, wobei der erste (102a) und der zweite (102b) Körperabschnitt jeweils extern angeordnete Ausrichtungsmerkmale (110a, 110b) aufweisen, um einem Benutzer zu ermöglichen, zu bestimmen, ob der erste (102a) und der zweite (102b) Körperabschnitt in Verwendung drehausgerichtet worden sind, wodurch bei erfolgreicher Drehausrichtung der Spalt (108a), der sich durch die Seite des ersten Körperabschnittes (102a) in den ersten Öffnungsabschnitt (104a) erstreckt, mit dem Spalt (108b), der sich durch die Seite des zweiten Körperabschnittes (102b) in den zweiten Öffnungsabschnitt (104b) erstreckt, ausgerichtet ist.

10. Injektionsscheibe (100) nach Anspruch 9, wobei einer von dem ersten Körperabschnitt (102a) und dem zweiten Körperabschnitt (102b) zumindest einen sich extern erstreckenden ersten Finger (110a) aufweist und der andere davon zumindest zwei sich extern erstreckende zweite Finger (110b) aufweist, wobei der erste Finger (110a) mit einem Spalt zwischen den zweiten Fingern (110b) ausgerichtet ist, wenn der erste (102a) und der zweite (102b) Körperabschnitt in Verwendung ordnungsgemäß ausgerichtet worden sind.

11. Ankersystem mit einem Stangenabschnitt (14), der an einer Oberfläche befestigt ist, und einer Injektionsscheibe (100, 200) gemäß einem vorhergehenden Anspruch.

## Revendications

1. Rondelle d'injection (100, 200) pour un système d'ancrage ayant une partie de tige (14) fixée à une surface, la rondelle d'injection (100, 200) comprenant des première (104a, 204a) et seconde (104b, 204b) parties d'ouverture disposées l'une par rapport à l'autre selon un axe parallèle à la partie de tige (14) en cours d'utilisation et qui définissent ensemble une ouverture à travers laquelle la partie de tige (14) s'étend en cours d'utilisation, la première partie d'ouverture (104a, 204a) ayant une largeur plus petite que la seconde partie d'ouverture (104b, 204b) dans une direction perpendiculaire à la partie de tige (14) en cours d'utilisation et dans laquelle un espace (108a, 108b, 208) s'étend à travers un côté de la rondelle d'injection (100, 200) dans chacune des première (104a, 204a) et seconde (104b, 204b) parties d'ouverture, l'espace (108a, 108b, 208) étant formé à travers toute l'épaisseur axiale de la rondelle d'injection (100, 200).

2. Rondelle d'injection (200) selon la revendication 1 qui est formée en une seule pièce.

3. Rondelle d'injection (200) selon la revendication 2, dans laquelle la première partie d'ouverture (204a) est définie par une première partie de surface interne (206a) de la rondelle d'injection (200) et la seconde partie d'ouverture (204b) est définie par une seconde partie de surface interne (206b) de la rondelle d'injection (200).

4. Rondelle d'injection (200) selon la revendication 3, dans laquelle les première (204a) et seconde (204b) parties d'ouverture sont sensiblement circulaires et la première partie d'ouverture (204a) a un diamètre plus petit que la seconde partie d'ouverture (204b).

5. Rondelle d'injection (200) selon l'une quelconque des revendications 2 à 4, dans laquelle la rondelle d'injection (200) est sensiblement en forme de C.

6. Rondelle d'injection (100) selon la revendication 1, qui n'est pas formée en une seule pièce, dans laquelle la première partie d'ouverture (104a) est définie par une première partie de corps (102a) et la seconde partie d'ouverture (104b) est définie par une seconde partie de corps séparée (102b), les première (102a) et seconde (102b) parties de corps étant empilées ensemble en cours d'utilisation et ayant des profils externes sensiblement similaires autour d'au moins certaines de leurs surfaces externes (103a, 103b).

7. Rondelle d'injection (100) selon la revendication 6, dans laquelle les première (104a) et seconde (104b) parties d'ouverture sont sensiblement circulaires et la première partie d'ouverture (104a) a un diamètre plus petit que la seconde partie d'ouverture (104b).

8. Rondelle d'injection (100) selon la revendication 7, dans laquelle la première partie de corps (102a) et la seconde partie de corps (102b) sont chacune sensiblement en forme de C.

9. Rondelle d'injection (100) selon l'une quelconque des revendications 6 à 8, dans laquelle les première (102a) et seconde (102b) parties de corps ont chacune des caractéristiques d'alignement disposées à l'extérieur (110a, 110b) pour permettre à un utilisateur de déterminer si les première (102a) et seconde (102b) parties de corps ont été alignées en rotation en cours d'utilisation, moyennant quoi, en cas d'alignement en rotation réussi, l'espace (108a) s'étendant à travers le côté de la première partie de corps (102a) dans la première partie d'ouverture (104a) s'aligne avec l'espace (108b) s'étendant à travers le côté de la seconde partie de corps (102b) dans la seconde partie d'ouverture (104b).

10. Rondelle d'injection (100) selon la revendication 9, dans laquelle l'une de la première partie de corps (102a) et de la seconde partie de corps (102b) a au moins un premier doigt s'étendant à l'extérieur (110a) et l'autre de celles-ci a au moins deux seconds doigts s'étendant à l'extérieur (110b), dans laquelle le premier doigt (110a) s'aligne avec un espace entre les seconds doigts (110b) lorsque les première (102a) et seconde (102b) parties de corps ont été correctement alignées en cours d'utilisation.

11. Système d'ancrage ayant une partie de tige (14) fixée à une surface et une rondelle d'injection (100, 200) selon l'une quelconque des revendications précédentes.
